# EUROPÄISCHE PATENTSCHRIFT

(11) **EP 4 305 737 B1**
(45) Veröffentlichungstag und Bekanntmachung des Hinweises auf die Patenterteilung: **25.02.2026**
(21) Anmeldenummer: 22725221.0
(22) Anmeldetag: 25.04.2022
(51) Int. Cl.: H02K 3/52, H02K 1/18, H02K 7/116

(54) **ANTRIEBSVORRICHTUNG MIT EINEM BÜRSTENLOSEN ELEKTROMOTOR**
DRIVE DEVICE HAVING A BRUSHLESS ELECTRIC MOTOR
DISPOSITIF D'ENTRAÎNEMENT DOTÉ D'UN MOTEUR ÉLECTRIQUE SANS BALAIS

(30) Priorität: 05.05.2021 DE 102021204545; 20.10.2021 DE 102021211846
(43) Veröffentlichungstag der Anmeldung: 17.01.2024
(73) Patentinhaber: Brose Fahrzeugteile SE & Co. Kommanditgesellschaft, Bamberg, 96052 Bamberg (DE)
(72) Erfinder: KALB, Roland, 96269 Rossach (DE); LANGE, Gabriele, 96364 Marktrodach (DE); STRAUSS, Wolfgang, 97294 Unterpleichfeld (DE); WÜST, Stefan, 97816 Lohr am Main (DE)
(74) Vertreter: FDST Patentanwälte
(86) Internationale Anmeldenummer: PCT/EP2022/060817
(87) Internationale Veröffentlichungsnummer: WO 2022/233616

(56) Entgegenhaltungen:
- WO-A1-2020/207946
- DE-A1- 102013 207 384
- DE-A1- 102019 203 525
- DE-A1- 102020 209 500
- US-A1- 2014 210 288
- US-A1- 2017 366 070
- US-A1- 2022 149 696
- US-B1- 6 211 631

## Beschreibung

Die Erfindung betrifft eine Antriebsvorrichtung, insbesondere eines elektromotorischen Verstellantriebs, vorzugsweise eines (Seil-)Fensterhebers, eines Kraftfahrzeugs.

Eine Antriebsvorrichtung, die beispielsweise als elektromotorischer Verstellantrieb eines Kraftfahrzeugs ein Stellelement, insbesondere eine Fensterscheibe einer Fahrzeugseitentür, zwischen zwei Endpositionen entlang eines Verstellweges antreibt, umfasst üblicherweise einen Elektromotor und ein daran gekoppeltes Getriebe, das in einem Getriebegehäuse angeordnet ist. Das Getriebegehäuse ist mit einem den Stator und den Rotor des Elektromotors aufnehmenden Motorgehäuse beispielsweise über eine flanschartige Anbindung verbunden, wobei der Elektromotor typischerweise ein bürstenbehafteter (Innenläufer-)Kommutatormotor oder auch ein bürstenloser Außenläufermotor sein kann. Derartige Antriebsvorrichtungen, insbesondere Fensterheberantriebe, sind am bestimmungsgemäßen Einbauort unter Umständen extremer Feuchtigkeit und hohen Temperaturschwankungen ausgesetzt.

Aus der US 2017/0366070 A1 ist eine Antriebsvorrichtung mit einem bürstenlosen Elektromotor bekannt, der einen Rotor mit einer Rotorwelle sowie einen Stator mit einer Statorwicklung mit einer Anzahl von Phasenanschlussdrähten aufweist. Ein Getriebegehäuse weist ein Elektronikfach mit darin einsetzbarer oder aufgenommener Leiterplatte mit Anschlussstellen für die Phasenanschlussdrähte und mit einem zur Drehachse der Rotorwelle koaxialen Gehäuseschacht auf, in den der Stator und der Rotor mit der Rotorwelle aufgenommen sind. Die in einem Anschlussadapter aufgenommen Phasenanschlussdrähte sind mit deren Anschlussraster an die Anschlussstellen der Leiterplatte angepasst.

Wird für eine derartige Antriebsvorrichtung ein bürstenloser, elektronisch kommutierter Elektromotor eingesetzt, dessen Stator eine mehrphasige, üblicherweise dreiphasige Stator- oder Drehstromwicklung aufweist, sind die Phasenanschlüsse mit einer die Drehstromwicklung bestromenden Motorelektronik zu kontaktieren. Die elektrische Verbindung der Phasenanschlüsse mit der Motorelektronik kann innerhalb der Antriebsvorrichtung an eine Leiterplatte erfolgen, auf welcher die elektrischen und/oder elektronischen Bauteile der Motorelektronik montiert und untereinander verbunden sind. Alternativ kann die elektrische Verbindung der Phasenanschlüsse auch mittels einer Steckverbindung (Steckkontaktierung) mit einer außerhalb der Antriebsvorrichtung vorgesehen Motorelektronik erfolgen.

Eine aus der DE 10 2011 121 716 B3 bekannte Antriebsvorrichtung zum Verstellen eines Abdeckelements eines Fahrzeugs, insbesondere für einen Fensterheber, umfasst ein Abtriebselement zum Verstellen des Fahrzeugteils und einen bürstenlosen, elektronisch kommutierten Elektromotor mit einem Stator, einem Rotor und einer hiermit verbundenen Antriebswelle (Motor- oder Rotorwelle) zum Antreiben des Abtriebselements. Der Rotor ist als radial zur Wellenachse außerhalb des Stators umlaufender Außenläufer ausgebildet. Der die Statorwicklung aufnehmende, beispielsweise als Blechpaket ausgeführte Statorgrundkörper des Stators kann auf einen buchsen- oder rohrartigen, hohlzylindrischen Statorträger aufgesetzt sein, durch welchen die den Rotor tragende Antriebswelle hindurch in das Getriebegehäuse geführt ist oder wird.

Die Phasen- oder Wicklungsdrähte der Statorwicklung (Drehfeldwicklung) können manuell gebündelt und mit zusätzlichen Hilfsmitteln, z. B. mit einer Klebefolie oder einem Kabelbinder, an einer gewünschten Position fixiert werden. Wünschenswert ist jedoch die Möglichkeit eines automatisierten Prozesses der Bündelung und Fixierung oder Vorfixierung der Phasenanschlüsse bzw. -drähte der Statorwicklung.

Bei einer aus der DE 10 2019 203 525 A1 bekannten Antriebsvorrichtung sind Schlitze an der Leiterplatte der Motor- oder Steuerelektronik vorzusehen, um die Phasendrähte an der oder in die Leiterplatte positionsgenau einfädeln zu können. Eine solcher Prozess erfordert jedoch beim Einsetzen der Leiterplatte in ein zugeordnetes Elektronikfach des Getriebegehäuses und anschließendes Einfädeln der Phasenanschlussdrähte in die Leiterplattenschlitze typischerweise zwei Bewegungsachsen oder -ebenen bei der Leiterplatten- oder Baugruppenmontage.

Bei einem automatisierten Prozess ist es erforderlich, dass der Stator inklusive dessen Statorwicklung oder die Baugruppe aus dem Stator und dem Rotor inklusive der Motor- oder Rotorwelle (Stator-Rotor-Baugruppe) vor dem Einsetzten in das Getriebegehäuse möglichst exakt ausgerichtet wird, damit die Phasen- oder Wicklungsdrähte (Phasenstart- und Phasenenddrähte) sowie der Statorträger (die Statorbuchse) mit dem Getriebegehäuse zuverlässig und fehlersicher montiert werden können.

Der Erfindung liegt die Aufgabe zugrunde, eine Antriebsvorrichtung mit verbessertem Konzept für die Phasenanschlüsse eines bürstenlosen Elektromotors anzugeben.

Diese Aufgabe wird erfindungsgemäß gelöst durch die Merkmale des Anspruchs 1. Vorteilhafte Weiterbildungen und Ausgestaltungen sind Gegenstand der Unteransprüche.

Die Antriebsvorrichtung, insbesondere eines elektromotorischen Verstellantriebs eines Kraftfahrzeugs, weist einen bürstenlosen Elektromotor mit einem Rotor mit einer mit diesem gekoppelten Rotorwelle und mit einem Stator auf, der einen auf einen rohr- oder zylinderförmigen Statorträger (Statorbuchse) aufgesetzten Statorgrundkörper mit einer Anzahl von sternförmig angeordneten Statorzähnen umfasst. Der Stator bzw. ein auf den Statorträger (form- und/oder kraftschlüssig) aufgesetzter (aufgepresster) Statorgrundkörper ist mit einer Statorwicklung (Drehfeldwicklung) mit einer Anzahl von Phasenanschlussdrähten versehen, welche bezogen auf die Wellen- oder Drehachse der Rotorwelle abschnittsweise axial und/- oder in Umfangsrichtung (azimutal) verlaufen können. Die Statorwicklung kann hierzu aus einer Anzahl von Einzel- oder Doppel- oder Mehrfachspulen gebildet sein, deren Spulenenden miteinander, beispielsweise in Stern- oder Dreieckschaltung, verschaltet sind und die Phasenanschlüsse als Anschlussdrähte bilden, über welche die (phasenversetzte oder phasengenaue) Bestromung der Statorwicklung erfolgt.

Die Antriebsvorrichtung weist ein Getriebegehäuse mit einem Elektronikfach und mit einem zur Drehachse (Wellenachse) der Rotorwelle koaxialen Gehäuseschacht auf. In das Elektronikfach ist eine Leiterplatte mit Anschlussstellen für die Phasenanschlussdrähte aufgenommen oder einsetzbar. In den, vorzugsweise hohlzylindrischen, Gehäuseschacht ist der Elektromotor bzw. die Stator-Rotor-Baugruppe mit der Rotorwelle und mit dem Statorträger aufgenommen oder einsetzbar. Hierzu weist das Getriebegehäuse eine in den Gehäuseschacht einmündende Gehäuseöffnung auf, über welche die Baugruppe aus Rotor und Rotorwelle sowie Stator mit Statorträger und Stator- oder Drehfeldwicklung in das Getriebegehäuse eingesetzt wird. Die Rotor- oder Motorwelle trägt hierbei vorteilhafterweise bereits eine Schnecke, die im Montagezustand mit einem im Getriebegehäuse drehbar gelagerten Schneckenrad eines 90°-Umlenkgetriebes (Schneckengetriebes) kämmt.

Die Antriebsvorrichtung weist ferner einen Anschlussadapter auf, mit dem oder in dem die Phasenanschlussdrähte radial orientiert sind. In dem Anschlussadapter sind die Phasenanschlussdrähte zudem in einem an die Anschlussstellen der Leiterplatte angepassten Anschlussraster aufgenommen. Besonders vorteilhaft sind die Phasenanschlussdrähte mittels des Anschlussadapters radial orientiert und in einer tangential zur Rotorwelle verlaufenden Linie ausgerichtet. Mit anderen Worten weist der Anschlussadapter eine Anzahl von in einem tangential orientierten und zum Statorträger radial beabstandeten Anschlussraster angeordnete Drahtöffnungen auf. Diese entspricht bzw. korrespondiert mit der Linie bzw. Ebene der zugehörigen Anschlussstellen der Leiterplatte. Auch kann der Anschlussadapter eine Anzahl, insbesondere eine der Anzahl der Phasenanschlussdrähte entsprechende Anzahl, von entlang eines Kreisbogens mit einem Mittelpunktswinkel zwischen 100° und 180°, vorzugsweise mit einem Mittelpunktswinkel von (130 ± 15), angeordnete schlitzartige Drahtöffnungen aufweisen. Diese sind geeigneter Weise als oder in Form von Axialnuten ausgeführt. Der Anschlussadapter ist vorzugsweise ein Kunststoffteil.

Mittels des Anschlussadapters ist es somit ermöglicht, dass in einem automatisierten Prozess die Leiterplatte senkrecht (radial) zur Rotorwelle in nur einer Ebene oder Achse in das Elektronikfach eingesetzt werden kann, wobei die Phasenanschlussdrähte automatisch in die Anschlussstellen der Leiterplatte hineingleiten bzw. einfädeln. Besonders vorteilhaft können daher die leiterplattenseitigen Anschlussstellen als einfach herstellbare, beispielsweise auch verzinnte, Löcher ausgeführt werden. Der Anschlussadapter weist eine der Anzahl der Phasenanschlussdrähte entsprechende Anzahl von umfangsseitig geschlossenen, also als Löcher ausgeführte Drahtöffnungen auf. Anstelle der Löcher können auch Schlitze vorgesehen sein, die geeigneter Weise zum Statorträger hin offene Drahtöffnungen sind.

In vorteilhafter Ausgestaltung weist der Anschlussadapter mindestens ein nachfolgend auch einfach als Montagedübel bezeichnetes Fügelement auf, das mit einer Fügeöffnung im Getriebegehäuse, vorzugsweise im Bereich eines Übergangs zwischen dem Elektronikfach bzw. dessen Fachboden zum Gehäuseschacht, korrespondiert. Mittels des Fügeelementes wird der Anschlussadapter im Zuge der Montage form- und/oder kraftschlüssig im Getriebegehäuse, insbesondere positionsgenau in einer Soll-Lage, fixiert. In einer Ausführungsform weist der Anschlussadapter zwei axial orientierte Fügeelemente oder - zapfen auf.

In einer Variante ist ein einzelner Montagedübel als Fügeelement über mindestens eine Sollbruchstelle in Form von durchtrennbaren oder abreißbaren Stegen oder Rippen in einer Adapteröffnung randseitig angeformt. Im Montagezustand des Anschlussadapters im Getriebegehäuse im Bereich eines Übergangs zwischen dem Elektronikfach bzw. dessen Fachboden zum Gehäuseschacht korrespondiert der Montagedübel mit einer in den Gehäuseschacht des Getriebegehäuses mündenden Fügeöffnung. Durch Eindrücken des adapterseitigen Montagedübels in die gehäuseseitige Fügeöffnung reißt der Montagedübel an den Sollbruchstellen ab, und es wird eine Fügeverbindung des Anschlussadapters mit dem Getriebegehäuse hergestellt. Geeigneter Weise weist der Montagedübel eine Anzahl an Radialrippen oder -laschen auf, so dass im Zuge des Eindrückens des Montagedübels in die gehäuseseitige Fügeöffnung eine form- und kraftschlüssige Verbindung nach Art eines Presssitzes hergestellt wird.

Eine zweckmäßige Weiterbildung sieht vor, dass der Anschlussadapter radial orientierte Stemmnoppen zum Fixieren der Leiterplatte aufweist, und/oder dass im Elektronikfach des Getriebegehäuses mindestens eine Stemmnoppe zum Fixieren der Leiterplatte vorgesehen ist. Die Stemmnoppen sind geeigneter Weise (kalt oder heiß) verformbar.

Besonders zweckmäßig weist der Stator bzw. dessen, vorzugweise als (stanzpaketiertes) Blechpaket ausgeführter, Statorgrundkörper einen elektrisch isolierenden Spulen- oder Wicklungskörper für die, insbesondere aus Einzel-, Doppel- oder Mehrfachspulen gebildete, Statorwicklung auf. Dieser Wickelkörper für die Spulen der Statorwicklung ist geeigneter Weise aus zwei halbschalenförmigen Nutkastenisolierungen gebildet, welche die sternförmig verlaufenden Statorzähne des Statorgrundkörpers zumindest teil- oder abschnittsweise um- oder übergreifen. Mindestens eine der auf den Statorgrundkörper aufgesetzten Nutkastenisolierungen weist einen den Statorträger umgreifenden manschettenartigen Kappenabschnitt auf. Dieser weist vorzugsweise radial orientierte Konturen unter Bildung von axial oder in einem spitzen Winkel zur Axialrichtung verlaufenden Radialnuten auf, in welchen die einzelnen Phasenanschlussdrähte abschnittsweise einliegen.

Der Anschlussadapter weist einen den Statorträger teilweise oder vollständig umgreifenden Ringabschnitt auf. Dieser ist an den vorzugsweise aus Kunststoff hergestellten Anschlussadapter derart angeformt, dass der die Drahtöffnungen für die Phasenanschlussdrähte aufweisende Adaptergrundkörper am Ringabschnitt tangential verlaufend angesetzt ist. Besonders bevorzugt weist der Anschlussadapter einen den manschettenartigen Kappenabschnitt der Nutkastenisolierung teilweise oder vollständig umgreifenden Ringabschnitt auf. Der Ringabschnitt oder Ring des Anschlussadapters dient vorteilhafterweise zur Ausrichtung der (radialen) Höhe der im Anschlussadapter, zweckmäßigerweise geklemmten, Phasenanschlussdrähte zur Mittlachse des Statorträgers (der Statorbuchse) bzw. zur Drehachse der Motor- oder Rotorwelle.

Insbesondere bei der Variante des Anschlussadapters mit geschlossenem Ringabschnitt weist dieser eine Fügekontur auf, welche mit einer Fügenut des Kappenabschnitt der Nutkastenisolierung unter Herstellung eines Formschlusses korrespondiert. Alternativ weist, bevorzugt bei einer Variante des Anschlussadapters mit teilweise geschlossenem Ringabschnitt, dieser zwei bogen- oder etwa viertelkreisförmige Rastarme mit endseitigen Rastelementen auf, welche im Montagezustand korrespondierende Rastkonturen am Kappenabschnitt der Nutkastenisolierung, insbesondere formschlüssig, hintergreifen.

Unter einem "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Ein Anschlussadapter in Form eines Klemmring, der auf den Statorträger aufsetzbar oder aufgesetzt ist, weist geeigneter Weise eine der Anzahl der Phasenanschlussdrähte entsprechende Anzahl an Ausnehmungen auf, über welche die Phasenanschlussdrähte geführt sind. Der Klemmring kann axial auf den Statorträger aufgeschoben werden, wobei die Phasenanschlussdrähte positionsgenau über die Ausnehmungen des Klemmrings geführt sind oder werden. Mittels des Klemmrings werden die Phasenanschlussdrähte in der gewünschten, vorgegebenen bzw. bestimmungsgemäßen Position gehalten und/oder fixiert. Die Lage der Phasenanschlussdrähte in den Ausnehmungen des Klemmrings kann praktisch beliebig sein.

In zweckmäßiger Ausgestaltung sind die Ausnehmungen des Klemmrings als zum Statorträger hin offene Radialnuten ausgebildet. Geeigneter Weise weist der Klemmring einen radialen Ringabschnitt und einen axialen Ringabschnitt auf. Der axiale Ringabschnitt, der insbesondere zum Stator gerichtete ist, ist radial außenseitig an den radialen Ringabschnitt angeformt. Der radiale Ringabschnitt weist eine Ringöffnung für den Statorträger und die Ausnehmungen für die Phasenanschlussdrähte auf.

Besonders vorteilhaft weist der Klemmring zwei miteinander fügbare oder gefügte Halbringe auf. Zweckmäßigerweise weist nur einer der beiden Halbringe die Ausnehmungen für die Phasenanschlussdrähte auf. Dies ermöglicht in einfacher Art und Weise das Aufsetzten des Klemmrings in Radialrichtung auf den Statorträger bzw. den Klemmring radial zweiseitig am Stator oder Statorträger zu montieren. Der mit den Ausnehmungen versehene Halbring wird hierbei über die in Umfangsrichtung des Statorträgers etwa halbrund angeordneten bzw. axial positionierten Phasenanschlussdrähte gesetzt.

Gemäß einer geeigneten Variante des Klemmrings ist dieser als ein Kreisbogen mit einem Mittelpunktswinkel größer 180° und kleiner oder gleich 225°, vorzugsweise kleiner 220°, insbesondere 216°, ausgeführt. Bei dieser Ausführung ermöglicht der sich über mehr als 180°, vorzugsweise über 3/5, des Kreisumfangs des Statorträgers erstreckende Klemmring ein sicheres Aufschnappen auf den Statorträger bzw. eine ausreichende Einschnappfunktion für einen sicheren Halt auf dem Statorträger.

Die Phasenanschlussdrähte sind geeigneter Weise auf der dem Stator abgewandten Seite des Klemmrings in eine radial orientierte Füge- und/oder Kontaktierungsposition geführt bzw. können in diese Position aufgebogen werden. Aufgrund der sicheren Positionierung der Phasenanschlussdrähte mittels des Klemmrings können die Phasenanschlussdrähte in einfacher Art und Weise sowie vorteilhafterweise automatisiert bzw. vollautomatisch in die gewünschte Lage und Orientierung gebracht und vorzugsweise dort fixiert werden.

Zweckmäßigerweise sind sechs Phasenanschlussdrähte oder drei Phasenanschlusspaare vorgesehen. Die Phasenanschlussdrähte sind mittels des Anschlussadapters radial orientiert und im vorgesehenen Raster, vorzugsweise zueinander äquidistant beabstandet, ausgerichtet. Aufgrund des zum Statorträger und zur Rotorwelle (Drehachse) vorzugsweise tangential verlaufenden Öffnungsrasters der Drahtöffnungen des Anschlussadapters sind die mittels dieses Adapters radial orientierten Phasenanschlussdrähte in einer zur Ebene der Leiterplatte parallelen und quer zur Drehachse verlaufenden Linie nebeneinander und beabstandet zueinander ausgerichtet.

Die mit der Erfindung erzielten Vorteile bestehen insbesondere darin, dass mittels des nachfolgend kurz als Adapter bezeichneten Draht- oder Anschlussadapters die Phasenanschlüsse als Start- und Enddrähte der Stator- oder Drehwicklung bzw. der diese bildenden Spulen auf möglichst kurzem Abstand zur Leiterplatte über ein definiertes Rastmaß möglichst exakt zueinander in einer Linie ausgerichtet werden. Hierdurch wiederum können, insbesondere anstelle von Schlitzten, in der Leiterplatte (gelochte) Bohrungen für die Phasenanschlussdrähte vorgesehen werden. Zudem kann die Montage der Leiterplatte über nur ein Fügerichtung (Ebene) anstelle von zwei Fügerichtungen erfolgen.

Über den vorzugsweise als Kunststoffteil ausgeführten Adapter sind die (Phasen-anschluss-)Drähte zueinander, insbesondere auch zu Transportzwecken, hinsichtlich eines unerwünschten Verbiegens besonders zuverlässig geschützt. Zudem ist der Aufwand für die Bauteilehandhabung, für eine Transportverpackung und gegebenenfalls für Nachrichtprozesse vor dem Verbau in das Antriebs- bzw. Getriebegehäuse reduziert. Über eine Feder-Nut- oder Steck-Konstruktion des Adapters zum Antriebs- bzw. Getriebegehäuse werden die (Phasenanschluss-)Drähte bezüglich der Höhe zur Leiterplatte durch eine erreichte kurze Toleranzkette besonders vorteilhaft ausgerichtet. Durch eine am Adapter zweckmäßigerweise vorgesehene seitliche Einführschrägen kann die Stator-Rotor-Baugruppe beim Fügen in das Antriebs- oder Getriebegehäuse radial ausgerichtet werden, was den Montageprozess hinsichtlich des Ausrichtaufwands und einer hohen Robustheit erheblich verbessert.

Im Anschluss an das Fügen der Stator-Rotor-Baugruppe in das Antriebs-/Getriebegehäuse kann der als Statorbuchse ausgeführte Statorträger in Folge des Einpressens des integrierten, dübelartigen Fügeelementes des Adapters durch eine vorgesehene Bohrung oder Fügeöffnung im Getriebegehäuse - und dort im Elektronikfach - und eine Bohrung oder Fügeöffnung im hohlzylindrischen Statorträger (Statorbuchse) über einen Formschluss radial und axial gesichert werden. Dadurch können die Einpresskräfte des Statorträgers in das Antriebs-/Getriebegehäuse reduziert werden, und die zulässigen Bauteiltoleranzen im Presssitz zwischen dem Statorträger und dem Getriebegehäuse können erhöht werden. Dies wiederum verbessert die Robustheit der Konstruktion der Antriebsvorrichtung.

Nachfolgend werden Ausführungsbeispiele der Erfindung anhand einer Zeichnung erläutert. Darin zeigen:
- Fig. 1: in perspektivischer Darstellung eine Antriebsvorrichtung mit einem Antriebs- oder Getriebegehäuse und darin aufgenommenem Elektromotor zum Antrieb einer Seiltrommel als Abtriebselement einer Verstelleinrichtung, insbesondere eines Fensterhebers, eines Kraftfahrzeugs,
- Fig. 2: in einer Explosionsdarstellung die Antriebsvorrichtung gemäß Fig. 1 mit integrierter Motorelektronik und mit dem Elektromotor mit Phasenanschlussdrähten (Phasenanschlüssen) einer Statorwicklung in einer Vormontageposition vor dem Einführen der Stator-Rotor-Baugruppe des Elektromotors in das Antriebs- oder Getriebegehäuse,
- Fig. 3: ausschnittsweise in perspektivischer Darstellung das Antriebs- oder Getriebegehäuse mit Blick in ein Elektronikfach und auf einen Anschlussadapter mit darin aufgenommenen, radial orientierten und in einer Linie ausgerichteten Phasenanschlussdrähten sowie mit einem Montagedübel als Fügeelement in einer Ausgangsposition,
- Fig. 4: in einer Darstellung gemäß Fig. 3 die Einbaulage des Anschlussadapters mit eingepresstem Montagedübel mit Blick durch eine in das Elektronikfach aufgenommene, mittels der strichlinierten Außenkonturen transparent dargestellte Leiterplatte,
- Fig. 5: ausschnittsweise in perspektivischer Darstellung das Antriebs- oder Getriebegehäuse mit Blick in einen Gehäuseschacht für die Stator-Rotor-Baugruppe mit gehäuseseitig angeordnetem Anschlussadapter mit eingepresstem Montagedübel,
- Fig. 6: in perspektivischer Darstellung den Anschlussadapter mit geschlitzten Draht- oder Klemmöffnungen für die Phasenanschlussdrähte der Statorwicklung,
- Fig. 7: in einer Darstellung gemäß Fig. 6 den Anschlussadapter mit gelochten Drahtöffnungen für die Phasenanschlussdrähte der Statorwicklung,
- Fig. 8: den Anschlussadapter gemäß Fig. 6 oder 7 mit einer Einführschräge und mit einer Fügelasche als Hinter- oder Untergriff im Getriebegehäuse,
- Fig. 9: ausschnittsweise in perspektivischer Darstellung den Anschlussadapter mit Blick auf eine Anzahl an Radialstreben als Sollbruchstelle des Montagedübels,
- Fig. 10: in perspektivischer Darstellung den Anschlussadapter mit einem Ringelement und einer halbschalförmige Nutkastenisolierung mit manschettenartigem Kappenabschnitt für die Statorwicklung (Drehfeldwicklung) für einen hohlzylindrischen Statorträger (Statorbuchse),
- Fig. 11: in einer Seitenansicht die aus Spulen gebildete Statorwicklung und die Nutkastenisolierung mit angeformtem Kappenabschnitt sowie darauf aufgesetztem Anschlussadapter in einer Ausführung mit Stemmnoppen und mit einem den Kappenabschnitt umgreifenden Fixierring oder Ringabschnitt,
- Fig. 12a: in einer perspektivischen Darstellung die aus Spulen gebildete Statorwicklung und die Nutkastenisolierung mit angeformtem Kappenabschnitt sowie darauf aufgesetztem Anschlussadapter in einer alternativen Ausführung mit geschlitzten Draht- oder Klemmöffnungen für die Phasenanschlussdrähte der Statorwicklung in einem den Kappenabschnitt der Nutkastenisolierung umgreifenden Fixierring (Ringabschnitt),
- Fig. 12b: in einer perspektivischen Darstellung den Anschlussadapter gemäß Fig. 12a in einer Rückseitenansicht mit einer Fügekontur (zur Vorpositionierung) und einem Rastelement,
- Fig. 12c: die Nutkastenisolierung gemäß Fig. 12a mit im Kappenabschnitt der der Nutkastenisolierung einer Rastnut und mit einer Rastkontur,
- Fig. 13: in einer perspektivischen Explosionsdarstellung das Antriebs- bzw. Getriebegehäuse mit Füge- oder Stecköffnungen an einem Übergang zwischen einem Getriebeschacht für die Stator-Rotor-Baugruppe und dem Elektronikfach(-boden) sowie mit dem Anschluss-/Adapter in einer Ausführung mit zu den Füge- oder Stecköffnungen korrespondierenden axialen Fügeelementen (Fügestiften),
- Fig. 14: in perspektivischer Darstellung die Ausführung gemäß Fig. 13 mit in den Gehäuseschacht eingesetzter Stator-Rotor-Baugruppe und mittels der gesteckten Fügestifte lagefixiertem Anschlussadapter,
- Fig. 15: in einer Darstellung gemäß Fig. 10 die halbschalförmige Nutkastenisolierung mit manschettenartigem Kappenabschnitt und den Anschlussadapter in einer Ausführung mit geschlitzten Drahtöffnungen und etwa halbkreisförmigem Ringelement mit Rastelementen in einer Vormontageposition am Kappenabschnitt der Nutkastenisolierung,
- Fig. 16: in einer perspektivischen Darstellung die Ausführung des Anschlussadapters gemäß Fig. 15 in am Kappenabschnitt der Nutkastenisolierung verrasteter Montageposition,
- Fig. 17: in einer perspektivischen Darstellung einen Klemmring als Anschlussadapter zur Positionierung und/oder Fixierung der Phasenanschlussdrähte an oder auf dem Statorträger, und
- Fig. 18: in einer perspektivischen Darstellung den Stator mit dem Statorträger mit darauf aufgesetztem Klemmring als Anschlussadapter gemäß Fig.1 und radial orientierten Phasenanschlussdrähten.

Einander entsprechende Teile sind in allen Figuren mit den gleichen Bezugszeichen versehen.

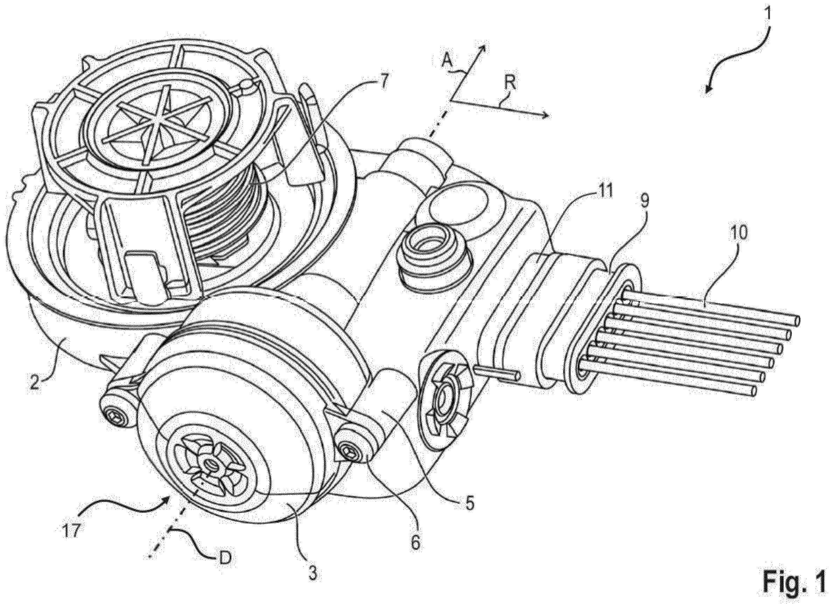

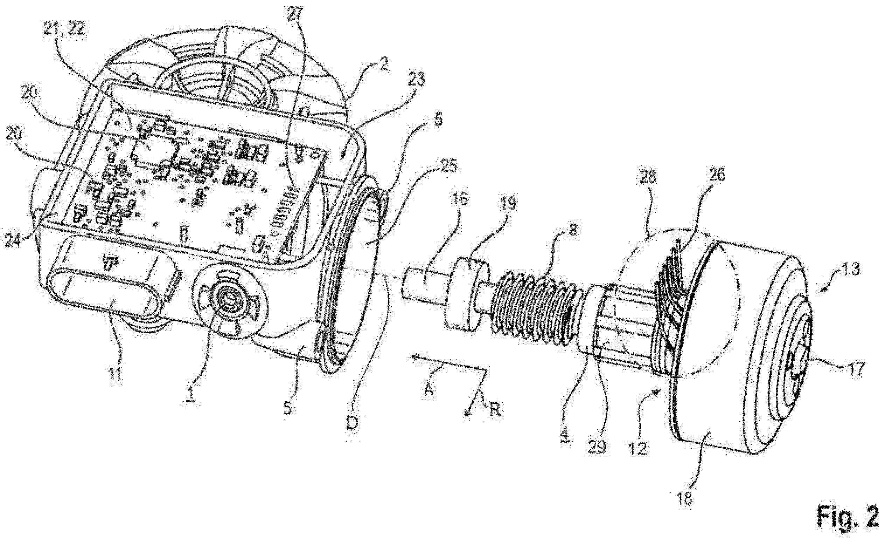

Die Figuren 1 und 2 zeigen eine elektromotorische Antriebsvorrichtung 1 mit einem aus einem Getriebegehäuse 2 und einem Motorgehäuse 3 gebildeten Antriebsgehäuse, in welches ein Elektromotor 4 (Fig. 2) zumindest teilweise eingesetzt ist. Das Getriebegehäuse 2 und das Motorgehäuse 3 sind mittels einer Flanschverbindung 5 miteinander lösbar verbunden, vorzugsweise mit Flanschschrauben 6 verschraubt. Der Elektromotor 4 treibt im Ausführungsbeispiel über ein Getriebe eine Seiltrommel 7 als Abtriebselement an.

Das Getriebe der Antriebsvorrichtung 1 ist ein 90°-Umlenkgetriebe, insbesondere ein Schnecken- oder Stirnradgetriebe (Stirnradschraubgetriebe). Dessen im Getriebegehäuse 2 angeordnetes (nicht sichtbares) Schneckenrad, welches mit der Seiltrommel 7 für ein Zugseil insbesondere eines Fensterhebers eines Kraftfahrzeugs gekoppelt ist, kämmt mit einer vom Elektromotor 4 angetriebenen Schnecke 8 (Fig. 2). Ein Anschlussstecker 9 mit Anschlussleitungen 10 zur Strom- und Spannungsversorgung der als Verstellantrieb des Kraftfahrzeugs dienenden Antriebsvorrichtung 1 sowie zum Zuführen und/oder Ausleiten von Steuer- und/oder Sensorsignalen wird in eine gehäuseseitigen Anschlussaufnahme 11 eingesteckt.

In den Figuren 1 und 2 sind die Axialrichtung A und die Radialrichtung R durch Pfeile verdeutlicht. Zudem ist die in den Figuren 1 und 2 strichpunktiert veranschaulichte Dreh- oder Wellenachse der Rotorwelle 11 mit D bezeichnet.

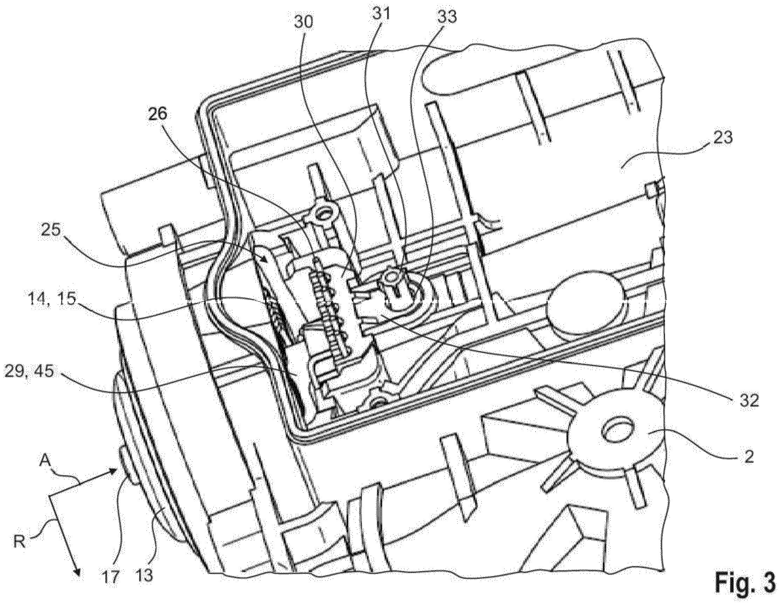

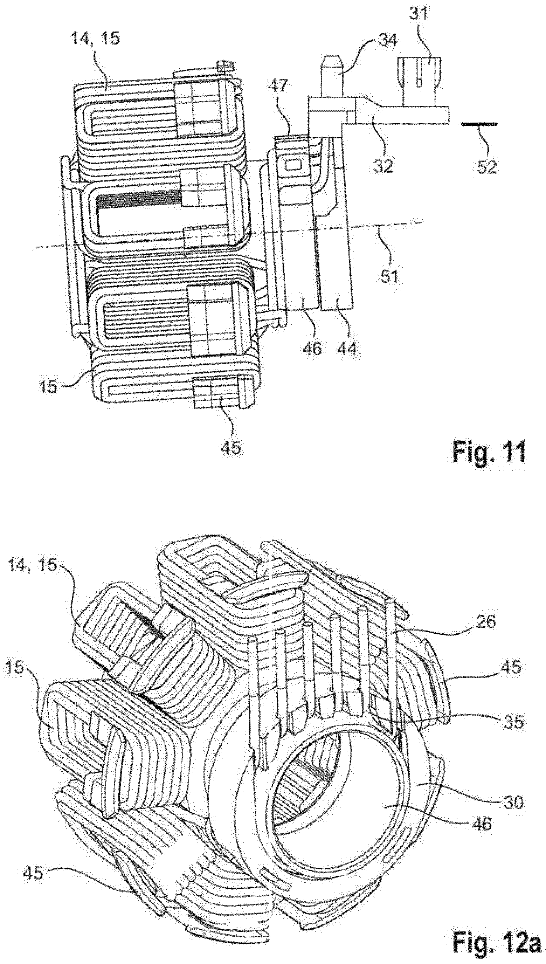

Wie aus Fig. 2 bei entnommenem Motorgehäuse 3 ersichtlich ist, weist der Elektromotor 4 einen nicht näher dargestellten Stator 12 und einen aus Permanentmagneten gebildeten Rotor 13 auf. Der Stator 12 trägt eine Stator- oder Drehfeldwicklung 14 (Fig. 3), die aus Spulen (Einzel- und/oder Doppelspule) 15 gebildet ist (Fig. 11, 12a und 16). Diese sind in nicht näher dargestellter Art und Weise auf sternförmig radial nach Außen gerichtete Statorzähne eines, insbesondere als Blechpaket ausgeführten, nicht näher gezeigten Statorgrundkörpers des Stators 12 gewickelt oder aufgesetzt. Eine Motorwelle (Rotorwelle) 16 ist im als Gehäusedeckel ausgeführten Motorgehäuse 3 an einer, vorzugsweise als Axiallager ausgeführten, Lagerstelle 17 gelagert oder sitzt dort ein. Die Permanentmagnete des Rotors 13 sind in einem topfartigen Gehäuse (Rotorgehäuse) 18 innenwandseitig angeordnet, wobei das Rotorgehäuse 18 mit den Permanentmagneten den Stator 12 bzw. dessen die Drehfeldwicklung 14 tragenden Statorgrundkörper unter Bildung eines Luftspaltes umgibt (umschließt). Das Gehäuse 18 ist über einen Wellenzapfen mit der Rotor- bzw. Motorwelle 16 drehfest verbunden und rotiert somit innerhalb des Motorgehäuses oder Gehäusedeckels 3 um den im Getriebegehäuse 2 feststehenden Stator 12 des somit als Außenläufermotor ausgeführten, bürstenlosen Elektromotors 4.

Auf der Rotorwelle 16, welche die im Montagezustand mit dem (nicht sichtbaren) Schneckenrad des Getriebes kämmende Schnecke 8 trägt, sitzt zudem wellenfest ein magnetischer Signalgeber (Polrad) 19, der bzw. das zur Bestimmung bzw. Ermittlung der Drehzahl und der Drehrichtung der Rotorwelle 16 des Rotors 13 mit einem (nicht sichtbaren) Magnetsensor, beispielsweise einem Hall-Sensor, berührungslos zusammenwirkt.

Innerhalb des Getriebegehäuses 2 befindet sich eine mit elektronischen und/oder elektrischen Bauelementen 20 bestückte Leiterplatte 21 einer Motorelektronik 22. Die Leiterplatte 21 ist in einem mit einem nicht gezeigten Deckel verschließbaren Elektronik 23 des Getriebegehäuses 2 angeordnet bzw. in das über eine Fach- oder Gehäuseöffnung zugängliche Elektronikfach 23 einsetzbar. Dieses wird mittels des hier nicht dargestellten Gehäusedeckels im Anschluss an die Montage der Leiterplatte 21 der Motorelektronik 22 verschlossen.

Vorteilhafterweise vor der Montage der Leiterplatte 21 wird der Elektromotor 4, dies bedeutet hier und im Folgenden die aus dem Stator 12 mit der Drehfeldwicklung 14 und dem Rotor 13 inklusive der Rotorwelle 16 gebildeten Stator-Rotor-Baugruppe über eine nicht näher bezeichnete Gehäuseöffnung in einen etwa hohlzylindrischen Gehäuseschacht 25 des Getriebegehäuses 2 eingeschoben, eingeführt bzw. eingesteckt. Die Leiterplatte 21 ist - bezogen auf die eingezeichnete Axialrichtung A und Radialrichtung R - zur Rotorwelle (Motorwelle) 16 radial beabstandet im Elektronikfach 23 des Getriebegehäuses 2 montiert. In dieser Position ist das Polrad 19 zum Magnetsensor als einem der Bauteile oder Bauelemente 20 für die berührungslose Drehzahl- und Drehrichtungserkennung der Rotorwelle (Motorwelle) 16 des Elektromotors 4 entsprechend positioniert.

Die Drehfeldwicklung 14 mit deren Spulen 15 weist im Ausführungsbeispiel sechs Phasenanschlussdrähte 26 auf, die mit Anschlussstellen 27 der Leiterplatte 21 in Form von gelochten Anschlussaufnahmen oder Bohrungen elektrisch kontaktiert, insbesondere verlötet, werden. Die Phasenanschlussdrähte 26 sind hier in drei, mit dem strichpunktierten Kreis 28 symbolisch eingefassten Phasenanschlusspaaren radial orientiert und in einer Linie ausgerichtet. Die Phasenanschlussdrähte 26 sind an deren für die Fügeverbindung bzw. zur Kontaktierung mit der Leiterplatte 21 vorgesehenen Endabschnitten zueinander parallel verlaufend angeordnet und hierzu in die bestimmungsgemäße Fügeposition radial aufgebogen.

Der vorzugsweise als stanzpaketierter Blechstapel ausgeführte Statorgrundkörper sitzt fest auf einem nachfolgend auch als Statorbuchse bezeichneten hohlzylindrischen Statorträger 29, über den oder durch welchen die Rotorwelle 16 geführt ist. Innerhalb der Statorbuchse 29 befindet sich in nicht näher dargestellter Art und Weise zweckmäßigerweise ein Radiallager für die Rotorwelle 16.

Fig. 3 zeigt ausschnittsweise das nachfolgend einfach als Getriebegehäuse 2 bezeichnete Antriebs- bzw. Getriebegehäuse mit Blick in das Elektronikfach 23 und dort speziell an einen Übergang oder an eine Gehäuseschnittstelle zwischen dem Elektronikfach 23 und dem Gehäuseschacht 25 mit darin eingesetzter Stator-Rotor-Baugruppe des Elektromotors 4. Erkennbar ist an dieser Schnittstelle ein nachfolgend auch einfach als Adapter bezeichneter Anschlussadapter 30, der an der genannten Schnittstelle angeordnet ist und dort, vorzugsweise formschlüssig in einer Gehäusekontur, einsitzt. In den Adapter 30 sind die Phasenanschlussdrähte 26 aufgenommen. Dies bedeutet, dass mittels des Adapters 30 die Phasenanschlussdrähte 26 der Stator- oder Drehfeldwicklung 14 bezogen auf die Drehachse D bzw. Axialrichtung A radial (in Radialrichtung R) orientiert sind. Zudem sind mittels des Adapters 30 die Phasenanschlussdrähte 26 bzw. deren Drahtenden in einer - bezogen auf den etwas kreisförmigen Querschnitt des Gehäuseschachtes 25 - tangentialen Linie (Ebene) in vorgegebenem Raster ausgerichtet.

Der Adapter 30 weist ein nachfolgend als Montagedübel bezeichnetes Fügeelement 31 auf. Dieser bzw. dieses befindet sich im Ausführungsbeispiel an oder in einem Ausleger 32 des Adapters 30. Der Montagedübel 31 ist hier in einer Vormontageposition am Adapter 30 bzw. am oder im Ausleger 32 über eine Sollbruchstelle 33 gehalten.

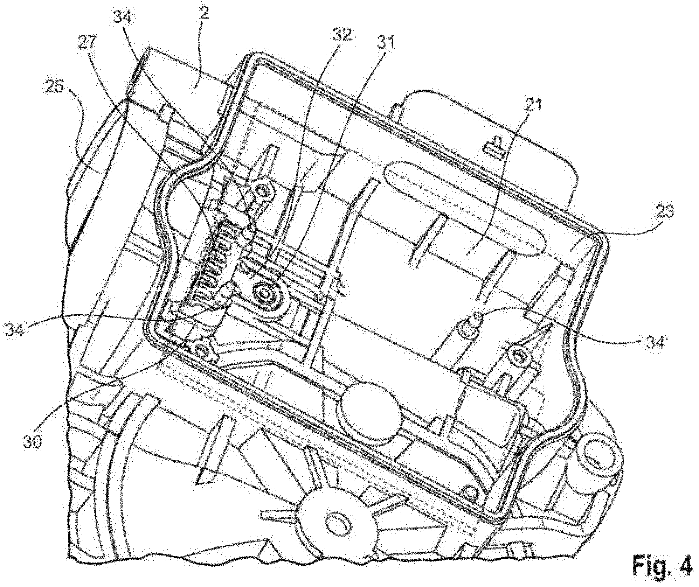

Fig. 4 zeigt in einer der Figur 3 ähnlichen Darstellung wiederum ausschnittsweise das Getriebegehäuse 2 mit Blick in das Elektronikfach 23 mit darin eingelegter Leiterplatte 21. Diese ist transparent dargestellt und strichliniert veranschaulicht. Erkennbar ist der Adapter 30, der in dieser Ausführungsform zwei radiale Stemmnoppen 34 aufweist. Ein zusätzlicher Stemmnoppen 34', der im Elektronikfach 23 bodenseitig angeformt ist, dient ergänzend zu den adapterseitigen Stemmnoppen 34 ebenfalls zur Positionierung und/oder Fixierung der Leiterplatte 21 im Getriebegehäuse 2, indem die Stemmnoppen 34, 34' (kalt oder warm) verformt oder verstemmt werden.

Der hier ohne die Phasenanschlussdrähte 26 gezeigte Adapter 30 ist in der gezeigten Montageposition im Getriebegehäuse 2 und dort im Elektronikfach 23 fixiert. Hierzu ist der Montagedübel 31 in Radialrichtung R in eine korrespondierende, nicht sichtbare Öffnung im Boden des Gehäusefaches 23 eingepresst.

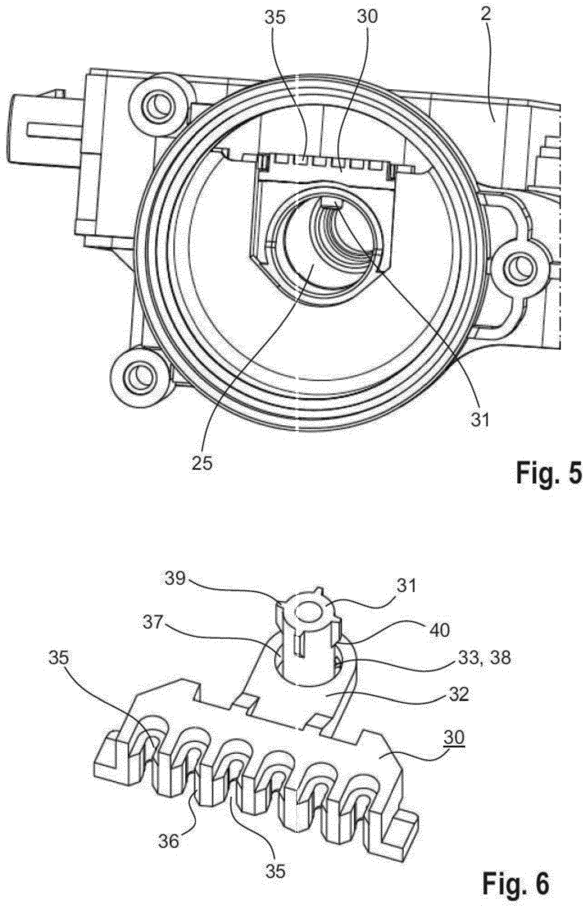

Dieser Füge- bzw. Fixierzustand des Adapters 30 im Getriebegehäuse 2 ist in Fig. 5 dargestellt. Erkennbar ragt der eingepresste Montagedübel 31 in den Gehäuseschacht 25 und durchdringt hierbei auch in nicht näher dargestellter Art und Weise eine korrespondierende Öffnung oder Bohrung im Statorträger (Statorbuchse) 29.

Die Fig. 6 bis 8 zeigen Ausführungsformen des Anschlussadapters 30. Der Anschlussadapter 30 gemäß Fig. 6 weist eine der Anzahl der Phasenanschlussdrähte 26 entsprechende Anzahl von geschlitzten Drahtöffnungen 35 auf. Mittels dieses Adapters 30 können die Phasenanschlussdrähte 26 axial in die Drahtöffnungen 35 eingefädelt und dort vorzugsweise klemmfixiert werden. Hierzu sind in den Drahtöffnungen 35 ein- oder beidseitig Klemmnasen oder Klemmrippen 36 angeformt.

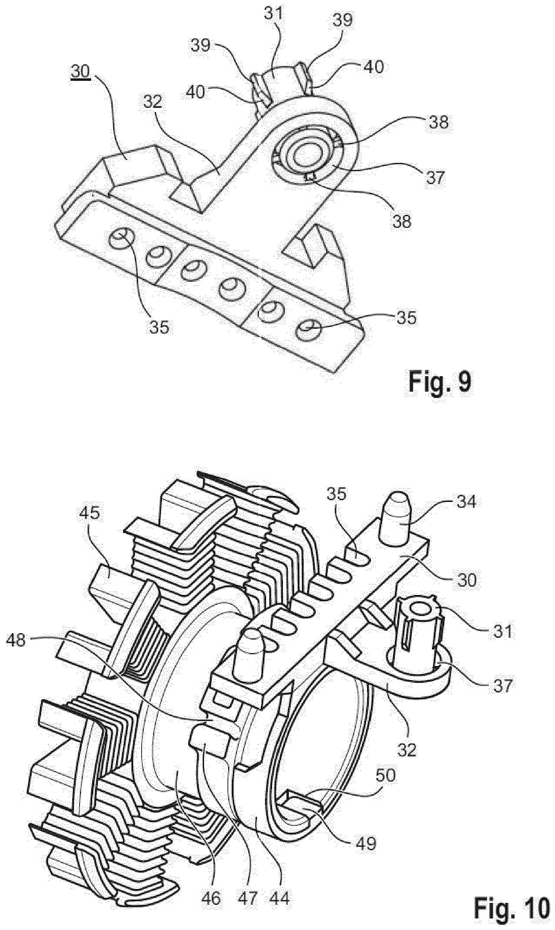

Vergleichsweise deutlich erkennbar ist eine hier kreisrunde Öffnung 37, in welcher der Montagdübel 31 über im Ausführungsbeispiel vier Radialstege (Fig. 9) in der Vormontageposition gehalten ist. Diese Radialstege 38 bilden die Sollbruchstelle 33 und sind dazu hinsichtlich deren Festigkeit derart bemessen, dass diese abreißen und der Montagedübel 31 in Radialrichtung R im Zuge des Einpressens in die korrespondierenden Öffnungen des Adapters 30 bzw. dessen Auslegers 32 und derjenigen im Elektronikfach 23 sowie derjenigen im Statorträger 29 eingesteckt werden kann. **In** der Montageposition ist der Montagedübel 31 in der adapterseitigen Öffnung 37 vorzugsweise nach Art eines Presssitzes sicher gehalten. Hierzu weist der Montagedübel 31 eine Anzahl an, im Ausführungsbeispiel vier, Radialrippen 39 auf. Diese weisen vorzugsweise Ein- oder Anlaufschrägen 40 auf.

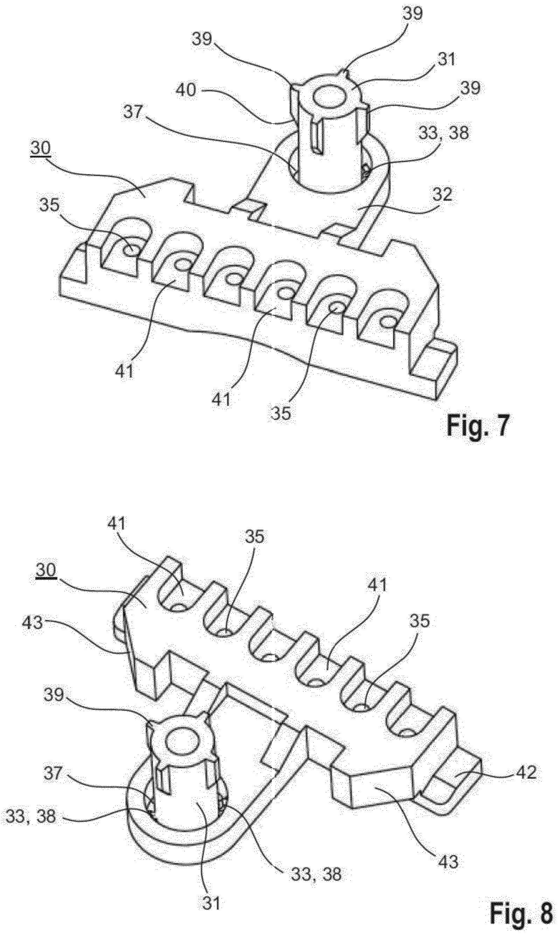

Fig. 7 zeigt eine Ausführungsform des Anschlussadapters 30 mit als Bohrungen ausgeführte Drahtöffnungen 35. Diese befinden sich in sicken- oder muldenartigen Kanälen 41. Diese dienen vorzugsweise zur Verbesserung des Lötzinnfließverlaufes bzw. zur Verbesserung der Platzverhältnisse zum Lötzinn bei Verlöten der Phasenanschlussdrähte 26 an den korrespondierenden Anschlussstellen 27 der Leiterplatte 21.

Der in Fig. 8 gezeigte Anschlussadapter 30 weist in dieser Ausführungsform, insbesondere an mindestens einer Schmalseite, eine angeformte Lasche oder Zunge 42 auf. Diese untergreift im Montagezustand eine korrespondierende Kontur im Getriebegehäuse 2. Hierdurch ist ein Ablösen oder Aufsteigen des als Drahthalter dienenden Anschlussadapters 30, insbesondere beim Ein- oder Verdrücken des Montagedübels 31, zuverlässig verhindert. Zudem weist der Anschlussadapter 30, insbesondere an mindestens einer Schmalseite, zusätzlich oder alternativ eine Einführschräge 43 zum radialen Ausrichten der Stator-Rotor-Baugruppe bzw. des Elektromotors 4 zum Getriebegehäuse 2 auf.

Fig. 10 zeigt den Anschlussadapter 30, der erfindungsgemäß mit einem, vorzugsweise angeformten, Ringkörper oder Ringabschnitt versehen ist.

Mit diesem Ringabschnitt 44 kann der Adapter 30 beispielsweise direkt auf den zylinderförmigen Statorträger (Statorbuchse 29) aufgesetzt werden. Im Ausführungsbeispiel ist der Adapter 30 mittels des hier umfangsseitig geschlossenen Ringabschnitts 44 auf eine Nutkasten- oder Nutkappenisolierung 45 und dort auf einen angeformten, manschettenartigen (hohlzylindrischen) Kappenabschnitt 46 aufgesetzt. Dieser ist im Montagezustand vom Statorträger bzw. von der Statorbuchse 29 durchsetzt.

Wie aus Fig. 11 vergleichsweise deutlich ersichtlich ist, weist der Kappenabschnitt 46 der Nutkastenisolierung 45 radial orientierte Konturen 47 unter Bildung von Radialnuten 48 auf. In diesen liegt jeweils einer der Phasenanschlussdrähte 26 zunächst axial orientiert ein. Der Ringabschnitt 44 des Adapters 30 dieser Ausführungsform weist, vorzugsweise diametral zu den Drahtöffnungen 35 des Adapters 30, innenseitig eine Fügekontur 49 auf. Diese sitzt im Steckzustand in einer korrespondierenden Fügenut 50 des nutkastenseitigen Kappenabschnitt 46 ein. Auf diese Weise ist der Adapter 30 in dieser gewünschten bzw. bestimmungsgemäßen Position mit tangentialer Ausrichtung an der Stator-Rotor-Baugruppe bzw. am Elektromotor 4 gehalten.

Fig. 11 verdeutlicht zudem durch die gestrichelte Linie 51 die bezogen auf eine Schräglage des Stators 12 - hier veranschaulicht durch die einzelne Nutkappenisolierung 45 und die darauf angeordneten Spulen 15 der Drehfeldwicklung 14 - verlaufende Parallelität der Leiterplatte 21, symbolisierte durch die Linie 52.

Fig. 12a zeigt wiederum den lediglich durch die Nutkastenisolierung 45 und die darauf angeordneten Spulen 15 der Drehfeldwicklung 14 veranschaulichten Stator 12 mit auf den Kappenabschnitt 46 der Nutkastenisolierung 45 aufgesetztem Adapter 30 einer weiteren Ausführungsform.

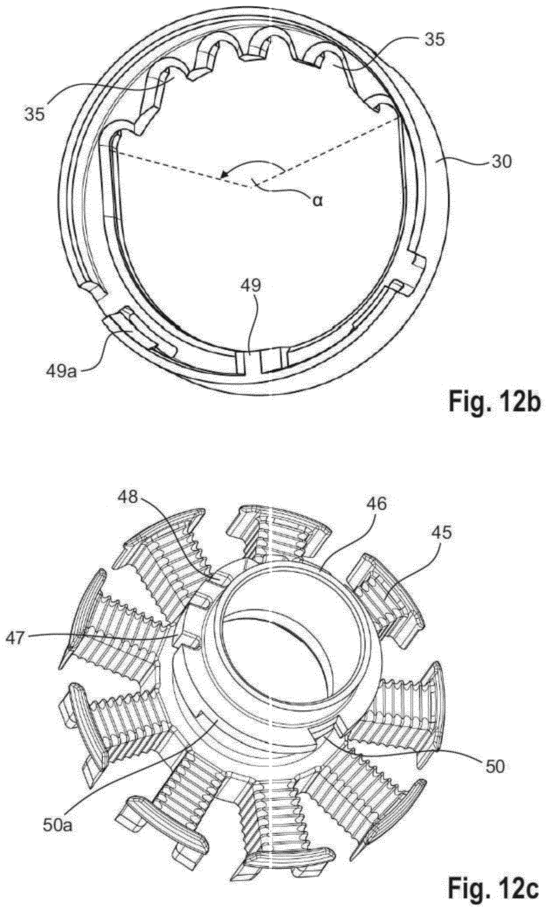

Wie in Verbindung mit Fig. 12b vergleichsweise deutlich erkennbar ist, ist der Adapter 30 in dieser Ausführungsform ein im Querschnitt etwa L-förmiger Ringkörper mit geschlitzten Drahtöffnungen 35. Diese sind bezogen auf die Drehachse D bzw. auf den nutkastenseitigen Kappenabschnitt 46 oder auf den Statorträger 29 als Axialnuten ausgeführt, die den Ringkörper in Radialrichtung R durchsetzten oder durchgreifen. Dadurch kann der Adapter 30 dieser Ausführungsform auf den Kappenabschnitt 46 aufgeschoben werde, wobei die zunächst axial verlaufenden Phasenanschlussdrähte 26 anschließend radial aufgebogen werden (Fig. 12a).

**In** dieser Ausführungsform weist der Adapter 30 sind die geschlitzten Drahtöffnungen (Axialnuten) 35 entlang eines Kreisbogens mit einem Mittelpunktswinkel α von (130 ± 5)° derart angeordnet und ausgebildet, dass die Phasenanschlussdrähte 26 in deren radialer Orientierung zueinander äquidistant ausgerichtet sind. Auch bei dieser Ausführungsform des Adapters 30 sind die Phasenanschlussdrähte 26 im oder mittels des Adapters 30 in die gewünschte radiale Orientierung aufgebogen und drahtendseitig im gewünschten Anschlussraster in einer tangentialen Linie ausgerichtet.

Fig. 12b zeigt den Anschlussadapter 30 in einer Rückseitenansicht mit wiederum einer Fügekontur 49 zur (Vor-)Positionierung und mit einem Rastelement 49a. Fig. 12c zeigt die Nutkastenisolierung 45 gemäß Fig. 12a mit im Kappenabschnitt 46 vorgesehener, zur Fügekontur 49 des Adapters 30 korrespondierender Rast- oder Fügenut 50. Das adapterseitige Rastelement 49a korrespondiert mit einer Rastkontur 50a der Nutkastenisolierung 45 im Bereich des Kappenabschnitts 46. Bei auf den Kappenabschnitt 46 aufgesetztem Adapter 30 verrastet dieser mit der Nutkastenisolierung 45, indem in der bestimmungsgemäßen Position des Adapters 30 das adapterseitige Rastelement 49a die nutkastenseitige Rastkontur 50a (formschlüssig) über- bzw. hintergreift.

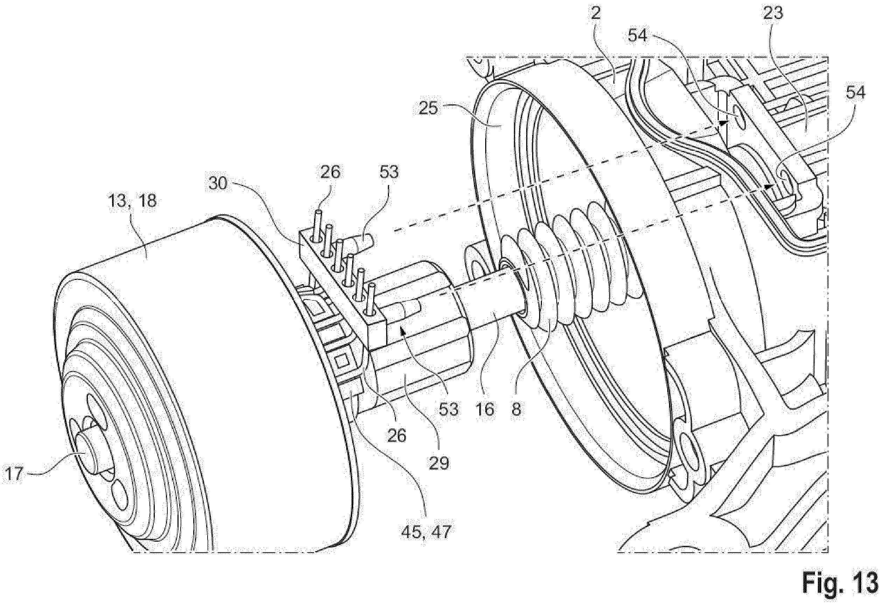

Fig. 13 zeigt eine Ausführungsform des Anschlussadapters 30 mit den in einer tangentialen Linie nebeneinander und vorzugsweise äquidistant beabstandeten Drahtöffnungen 35 mit darin bereits eingesetzten und radial aufgebogenen Phasenanschlussdrähten 26. Bei dieser Ausführungsform weist der Adapter 30 zwei axial orientierte Fügeelemente oder Axialzapfen 53 auf. Diese korrespondieren - wie durch die strichlinierten Pfeile angedeutet - mit Stecköffnungen 54 im Getriebegehäuse und dort am Übergang des (hohlzylindrischen) Gehäuseschachtes 25 zum Elektronikfach 23 im Bereich dessen Fachbodens.

Anhand der Darstellung gemäß Fig. 13 ist die zum Einführen in das Getriebegehäuse 2 und dort in den Gehäuseschacht 25 vorbereitete Stator-Rotor-Baugruppe des Elektromotors 4 inclusive Drehfeldwicklung 14 und Anschlussadapter 30 mit darin bereits eingefädelten sowie radial orientierten und im gewünschten Raster ausgerichteten Phasenanschlussdrähten 26 erkennbar. Veranschaulicht ist die Vormontageposition der in das Getriebegehäuse 2 einzuführenden Stator-Rotor-Baugruppe inklusive der Fügeelemente 52, 53 zum Fixieren des Anschlussadapters 30 mit darin eingefädelten sowie radial orientierten und im gewünschten, an die leiterplatteseitigen Anschlussstellen 27 angepasstem Raster.

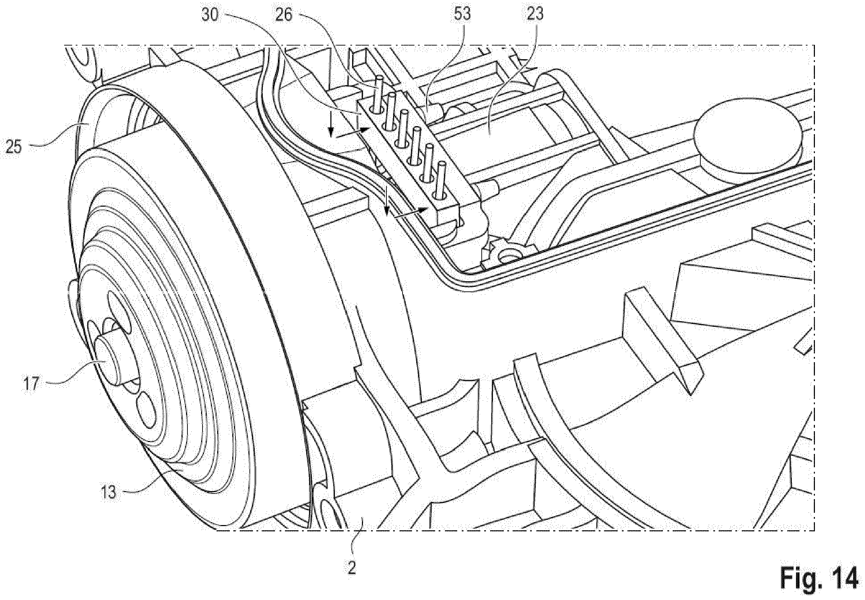

Im in Fig. 14 gezeigten Montagezustand mit exakt ausgerichteten Phasenanschlussdrähten 26 kann nunmehr die Leiterplatte 21 mit oder in nur einer einzelnen Montageachse (Ebene) - hier entlang der Radialrichtung R - in das Elektronikfach 23 eingesetzt werden. Dabei fädeln die ausgerichteten, radial orientierten Phasenanschlussdrähte 26 quasi automatisch in die korrespondierenden Anschlussstellen 27 der Leiterplatte 21 ein.

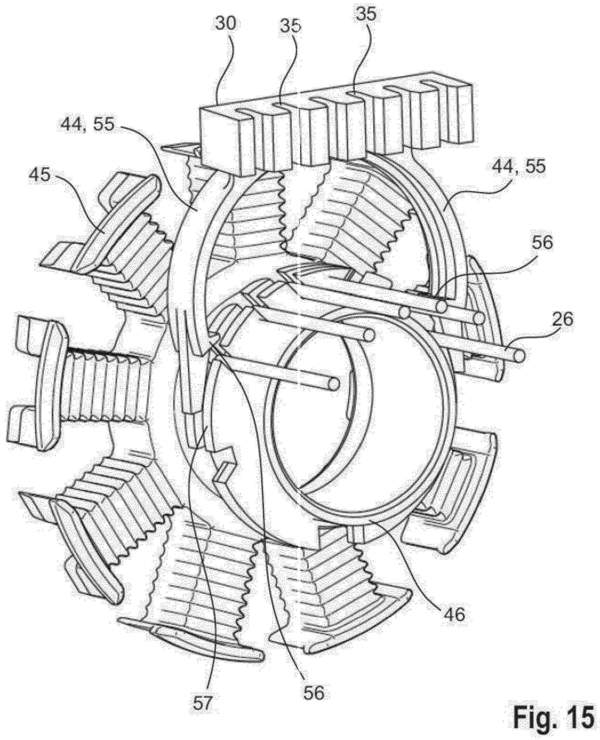

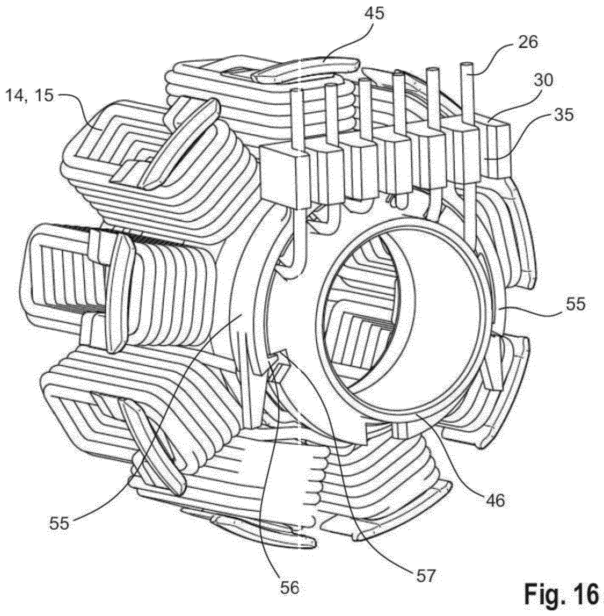

Die Fig. 15 und 16 zeigen eine weitere Ausführungsform des Anschlussadapters 30 in einer Vormontageposition zur Nutkastenisolierung 45 (Fig. 15) bzw. in der Endmontageposition mit in den Drahtöffnungen 35 des Adapters 30 radial und im gewünschten Raster tangential ausgerichteten Phasenanschlussdrähten 26. Zur Veranschaulichung sind die Phasenanschlussdrähte 26 in deren zunächst axialer Orientierung und im Anschluss an das radiale Aufbiegen in der gewünschten radialen und tangentialen Ausrichtung im vorgesehenen Raster.

Bei dieser Ausführungsform weist der Adapter 30 wiederum erfindungsgemäß einen Ringabschnitt 44 auf. Dieser ist hier jedoch nicht umfangsseitig geschlossen. Vielmehr ist der Ringabschnitt 44 aus zwei viertelkreisförmigen Rastarmen 55 mit endseitigen Rasthaken 56 ausgeführt. Mittels dieser Rasthaken 56 wird der Adapter 30 an dem Kappenabschnitt 46 der Nutkastenisolierung 45 verrastet. Hierzu sind an den Kappenabschnitt 46 korrespondierende Rastkonturen 57 angeformt.

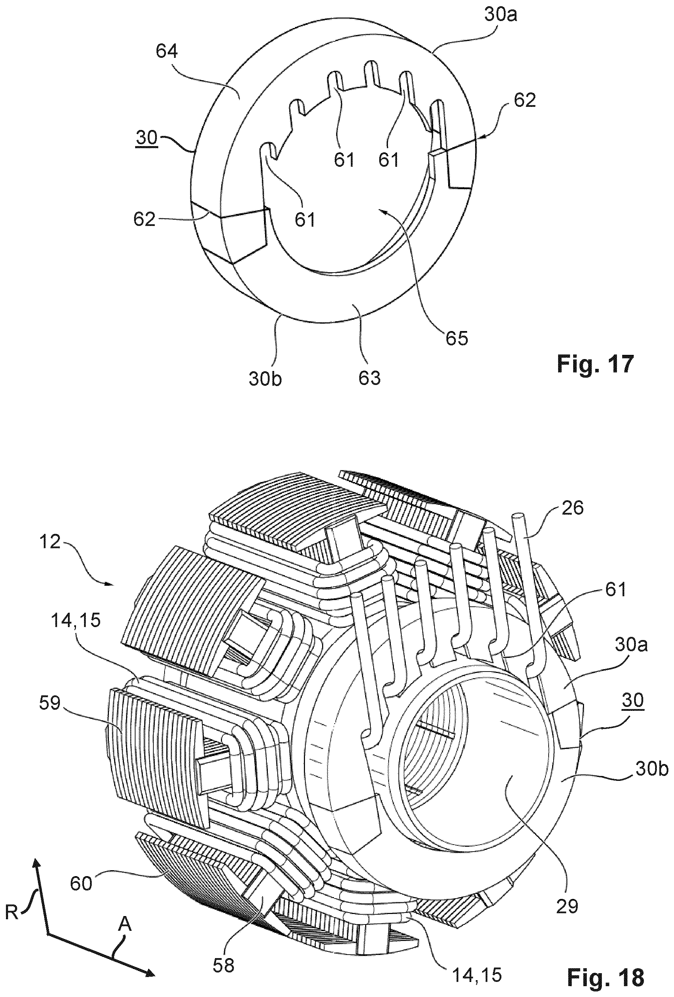

Fig. 17 zeigt einen Klemmring als Anschlussadapter 30 für die Phasenanschlussdrähte 26, und Fig. 18 zeigt den Stator 12 mit dem Klemmring 30 als Anschlussadapter. Der Stator 12 weist einen auf den rohr- oder zylinderförmigen (hohlzylindrischen) Statorträger 29 aufgesetzten Statorgrundkörper 58 mit einer Anzahl von sternförmig angeordneten Statorzähnen 59 auf. Über den hohlzylindrischen Statorträger 29 wird die Motor- oder Rotorwelle 16 geführt, d. h. der Statorträger 29 weist eine zentrale Wellendurchführung für die Rotorwelle 16 auf.

Erkennbar ist die Statorwicklung 14 die aus den auf Statorzähnen 60 des Stators 12 bzw. dessen Statorgrundkörper 58 angeordneten Einzel- oder Doppelspulen 15 gebildet. Die Spulenenden bilden als Phasenanschlussdrähte 26 die Phasenanschlüsse zur phasengerechten Bestromung der Statorwicklung 14 und werden in oder mit der Motorelektronik 22 beispielsweise in Stern- oder Dreieckschaltung verschaltet.

**In** einem Ausgangszustand verlaufen die Phasenanschlussdrähte 26 - bezogen auf die Wellenachse der Rotorwelle 16 - vorzugsweise zumindest abschnittsweise axial, also in Axialrichtung A. **In** diesem Ausgangszustand liegen die Phasenanschlussdrähte 26 halbrund bzw. in einem Kreisbogen entlang des Umfangs des Statorträgers 29 an diesem, vorzugsweise direkt, an und sind in dieser Lage und Orientierung vorpositioniert. Die Phasenanschlussdrähte 26 können auch, insbesondere nur geringfügig, zum Statorträger 29 (radial) beabstandet sein. Anschließend wird der Klemmring 30 beispielsweise in Axialrichtung A auf den Statorträger 29 aufgeschoben.

Der Klemmring bzw. Adapter 30 weist eine der Anzahl der Phasenanschlussdrähte 26 entsprechende Anzahl an Ausnehmungen 61 auf. Über diese Ausnehmungen 61 sind bzw. werden die Phasenanschlussdrähte 26 im Zuge des Aufsetzens des Klemmrings 30 auf den Statorträger 29 geführt, wobei die Phasenanschlussdrähte 26 positionsgenau über die Ausnehmungen 61 des Klemmrings 30 geführt sind oder werden. Mittels des Klemmrings 30 werden die Phasenanschlussdrähte 26 in der gewünschten, vorgegebenen oder bestimmungsgemäßen Position gehalten und vorzugsweise auch fixiert.

Die Ausnehmungen 61 des Klemmrings bz. Adapters 30 sind als zum Statorträger 29 hin offene Radialnuten ausgebildet. Der Klemmring 30 weist zwei an einander radial gegenüberliegenden Fügestellen 62 miteinander verbundene, insbesondere miteinander verrastete, Halbringe 30a und 30b auf. Nur einer der beiden Halbringe, hier der obere Halbring 30a, weist die Ausnehmungen 61 für die Phasenanschlussdrähte 26 auf. Dies ermöglicht es, den Klemmring 30 in Radialrichtung R auf den Statorträger 29 aufzusetzen bzw. radial zweiseitig zu montieren. Der mit den Ausnehmungen 61 versehene Halbring 30a wird hierbei über die in Umfangsrichtung des Statorträgers 29 halbrund angeordneten bzw. axial positionierten Phasenanschlussdrähte 26 gesetzt.

Der Klemmring als Anschlussadapter 30 weist einen radialen Ringabschnitt 63 und einen an den radialen Ringabschnitt 63 angeformten, zum Stator 12 gerichteten axialen Ringabschnitt 64 auf. Der radiale Ringabschnitt 63 weist eine zentrale Ringöffnung 65 auf, deren Innendurchmesser oder lichte Weist dem Außendurchmesser des Statorträgers 29 entspricht, so dass der Klemmring 30 einfach und zuverlässig auf den Statorträger 29 aufgesetzt und, vorzugsweise spielfrei, an diesem gehalten ist.

Die Phasenanschlussdrähte 26 sind auf der dem Stator 12 bzw. dessen Statorrundkörper 58 abgewandten Seite des Klemmrings 30 in eine radial orientierte Füge- und/oder Kontaktierungsposition geführt und hierzu entsprechend radial aufgebogen. Aufgrund der sicheren Positionierung der Phasenanschlussdrähte 26 mittels des Klemmrings bzw. Anschlussadapters 30 können die Phasenanschlussdrähte 26 automatisiert bzw. vollautomatisch in die gezeigte Lage und Orientierung gebracht werden.

Im Ausführungsbeispiel sind sechs Phasenanschlussdrähte 26 oder drei Phasenanschlusspaare vorgesehen. Die Phasenanschlussdrähte 26 sind umfangsseitig des Statorträgers 29 im vom Klemmring 30 gebildeten Kreissektor von ca. 135° und in Umfangsrichtung des Statorträgers 29 zueinander äquidistant angeordnet. In dieser, vorzugsweise radialen, Orientierung können die Phasenanschlüsse 26 zuverlässig zu deren elektrischer Kontaktierung an die Leiterplatte 21 der Motorelektronik 22 geführt und dort elektrisch kontaktiert werden.

Zusammenfassend betrifft die Erfindung eine Antriebsvorrichtung 1 mit einem bürstenlosen Elektromotor 4 mit einem Rotor 13 und mit einem Stator 12 mit einem Statorträger 29 und mit einer Statorwicklung 14 mit einer Anzahl von Phasenanschlussdrähten 26. Die Antriebsvorrichtung 1 weist ein Getriebegehäuse 2 mit einem Elektronikfach 23 mit darin einsetzbarer oder aufgenommener Leiterplatte 21 mit Anschlussstellen 27 für die Phasenanschlussdrähte 26 sowie mit einem zur Drehachse D bzw. zur Rotorwelle 16 koaxialen Gehäuseschacht 25 auf, in den der Elektromotor 4 bzw. der Stator 12 mit dem Statorträger 29 und der Rotor 13 mit der Rotorwelle 16, insbesondere als Stator-Rotor-Baugruppe, aufgenommen oder einsetzbar ist.

Ein Anschlussadapter 30, in dem die Phasenanschlussdrähte 26 aufgenommen oder eingeführt oder eingefädelt sind, dient zur Biegung und/oder Orientierung der Phasenanschlussdrähte 26 in Radialrichtung R sowie zur Ausrichtung der Phasenanschlussdrähte 26 in ein an die Anschlussstellen 27 der Leiterplatte 21 angepasstes, insbesondere tangentiales, Anschlussraster. Der Anschlussadapter 30 kann zudem als Transportschutz oder Transportsicherung dienen, insbesondere für den Anfang (Wickel-Start) der Statorwicklung 14 und/oder für die Spulenenden der Spulen15 (Enddrähte).

Die Erfindung betrifft auch eine Antriebsvorrichtung 1, aufweisend einen bürstenlosen Elektromotor 4 mit einem Rotor 13 und mit einem Stator 12, der einen auf einen rohr- oder zylinderförmigen Statorträger 29 aufgesetzten Statorgrundkörper 58 mit einer Anzahl von Statorzähnen 59 und darauf angeordneter Statorwicklung 14 mit einer Anzahl von zumindest abschnittsweise axial verlaufenden Phasenanschlussdrähten 26 aufweist, und einen auf den Statorträger 29 aufgesetzten, vorzugsweise aus Halbringen 30a, 30b zusammengesetzten, Klemmring 30 mit einer Anzahl an Ausnehmungen 61, über welche die Phasenanschlussdrähte 26 geführt sind.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

Auch kann die beschriebene Lösung nicht nur in dem speziell dargestellten Anwendungsfall zum Einsatz kommen, sondern auch in ähnlicher Ausführung bei anderen Kraftfahrzeug-Anwendungen, wie zum Beispiel bei Tür- und Heckklappensystemen, bei Fahrzeugschlössern, bei verstellbaren Sitz- und Innenraumsystemen sowie bei weiteren elektrischen Antrieben.

## Patentansprüche

1. Antriebsvorrichtung (1), insbesondere eines elektromotorischen Verstellantriebs eines Kraftfahrzeugs, aufweisend
- einen bürstenlosen Elektromotor (4) mit einem Rotor (13) mit einer mit diesem gekoppelten Rotorwelle (16) und mit einem Stator (12), der einen buchsenförmigen oder hohlzylindrischen Statorträger (29) und einen auf den Statorträger (29) aufgesetzten Statorgrundkörper umfasst, der eine Drehfeld- oder Statorwicklung (14) mit einer Anzahl von Phasenanschlussdrähten (26) aufweist,
- ein Getriebegehäuse (2) mit einem Elektronikfach (23) mit darin einsetzbarer oder aufgenommener Leiterplatte (21) mit Anschlussstellen (27) für die Phasenanschlussdrähte (26) und mit einem zur Drehachse (D) der Rotorwelle (16) koaxialen Gehäuseschacht (25), in den der Stator (12) mit dem Statorträger (29) und der Rotor (13) mit der Rotorwelle (16) aufgenommen oder einsetzbar ist, und
- einen Anschlussadapter (30), in dem die Phasenanschlussdrähte (26) radial orientiert und in einem an die Anschlussstellen (27) der Leiterplatte (21) angepassten Anschlussraster aufgenommen sind,
- wobei der Anschlussadapter (30) einen den Statorträger (29) teilweise oder vollständig umgreifenden Ringabschnitt (44, 55, 63, 64) aufweist.

2. Antriebsvorrichtung (1) nach Anspruch 1,
**dadurch gekennzeichnet,**
- **dass** der Anschlussadapter (30) eine Anzahl, insbesondere eine der Anzahl der Phasenanschlussdrähte (26) entsprechende Anzahl, von loch- oder schlitzartigen Drahtöffnungen (35) aufweist, und/oder
- **dass** der Anschlussadapter (30) eine Anzahl, insbesondere eine der Anzahl der Phasenanschlussdrähte (26) entsprechende Anzahl, von in einem tangential orientierten und zum Statorträger (29) radial beabstandeten Anschlussraster angeordnete Drahtöffnungen (35) aufweist, und/- oder
- **dass** der Anschlussadapter (30) eine Anzahl, insbesondere eine der Anzahl der Phasenanschlussdrähte (26) entsprechende Anzahl, von entlang eines Kreisbogens mit einem Mittelpunktswinkel (α) zwischen 100° und 180°, vorzugsweise mit einem Mittelpunktswinkel (α) von (130 ± 15)°, angeordneten schlitzartigen Drahtöffnungen (35), insbesondere als oder in Form von Axialnuten, oder Ausnehmungen (61), insbesondere als oder in Form von Radialnuten, aufweist.

3. Antriebsvorrichtung (1) nach Anspruch 1 oder 2,
**dadurch gekennzeichnet,**
**dass** der Anschlussadapter (30) mindestens ein Fügelement (31, 53) aufweist, das mit einer Fügeöffnung im Getriebegehäuse (2), vorzugsweise im Bereich eines Übergangs zwischen dem Elektronikfach (23) zum Gehäuseschacht (25), korrespondiert.

4. Antriebsvorrichtung (1) nach einem der Ansprüche 1 bis 3,
**dadurch gekennzeichnet,**
- **dass** der Anschlussadapter (30) eine Anzahl von, vorzugsweise zwei, axial orientierte, insbesondere zapfenförmige oder dübelartige, Fügeelemente (53) aufweist, oder
- **dass** der Anschlussadapter (30) ein über mindestens eine Sollbruchstelle (33) angeformtes, insbesondere zapfenförmiges oder dübelartiges, vorzugsweise radial orientiertes, Fügeelement (31) aufweist, wobei durch Eindrücken des adapterseitigen Fügeelements (31) in die gehäuseseitige Fügeöffnung eine Fügeverbindung hergestellt wird oder ist.

5. Antriebsvorrichtung (1) nach einem der Ansprüche 1 bis 4,
**dadurch gekennzeichnet,**
- **dass** der Anschlussadapter (30) radial orientierte Stemmnoppen (34) zum Fixieren der Leiterplatte (21) aufweist, und/oder
- **dass** im Elektronikfach (23) des Getriebegehäuses (2) mindestens ein Stemmnoppen (34') zum Fixieren der Leiterplatte (21) vorgesehen ist.

6. Antriebsvorrichtung (1) nach einem der Ansprüche 1 bis 5,
**gekennzeichnet durch**
mindestens eine dem Stator (12) zugeordnete, insbesondere halbschalenförmige, als Spulen- oder Wicklungskörper für die, insbesondere aus Einzel-, Doppel- oder Mehrfachspulen gebildete, Statorwicklung (14) vorgesehene Nutkastenisolierung (45) mit einem den Statorträger (29) umgreifenden manschettenartigen Kappenabschnitt (46).

7. Antriebsvorrichtung (1) nach Anspruch 6,
**dadurch gekennzeichnet,**
**dass** der Ringabschnitt (44, 55) des Anschlussadapters (30) den manschettenartigen Kappenabschnitt (46) der Nutkastenisolierung (45) teilweise oder vollständig umgreift.

8. Antriebsvorrichtung (1) nach Anspruch 7,
**dadurch gekennzeichnet,**
- **dass** der geschlossene Ringabschnitt (44) des Anschlussadapters (30) eine Fügekontur (49) aufweist, welche mit einer Fügenut (50) des Kappenabschnitt (46) der Nutkastenisolierung (45) unter Herstellung eines Formschlusses korrespondiert, oder
- **dass** der teilweise geschlossene Ringabschnitt (44) des Anschlussadapters (30) bogenförmige Rastarme (55) mit endseitigen Rastelementen (56) aufweist, welche im Montagezustand an korrespondierenden Rastkonturen (57) am Kappenabschnitt (46) der Nutkastenisolierung (45) verrasten.

9. Antriebsvorrichtung (1) nach Anspruch 2,
**dadurch gekennzeichnet,**
- **dass** der Anschlussadapter als Klemmring (30) einen radialen Ringabschnitt (63) mit einer Ringöffnung (65) für den Statorträger (29) und mit den Ausnehmungen (61) für die Phasenanschlussdrähte (26) sowie einen an den radialen Ringabschnitt (63) angeformten, insbesondere zum Stator (12) gerichteten, axialen Ringabschnitt (64) aufweist, und/oder
- **dass** der Klemmring als Anschlussadapter (30) zwei miteinander fügbare oder gefügte Halbringe (30a, 30b) aufweist.

10. Antriebsvorrichtung (1) nach einem der Ansprüche 1 bis 9,
**dadurch gekennzeichnet,**
**dass** sechs Phasenanschlussdrähte (26) oder drei Phasenanschlusspaare vorgesehen sind.

11. Antriebsvorrichtung (1) nach einem der Ansprüche 1 bis 10 zur Verwendung in einem Fensterheber, insbesondere in einem Seilfensterheber.

## Claims

1. Drive apparatus (1), in particular an electromotive adjusting drive of a motor vehicle, comprising
- a brushless electric motor (4) having a rotor (13) with a rotor shaft (16) coupled to it and having a stator (12) which comprises a socket-like or hollow-cylindrical stator support (29) and a stator main body which is mounted on the stator support (29) and has a rotary field winding or stator winding (14) having a number of phase connection wires (26),
- a gear mechanism housing (2) having an electronics compartment (23) with a printed circuit board (21) which can be inserted or is received in it and has connection points (27) for the phase connection wires (26) and having a housing shaft (25) which is coaxial with respect to the rotation axis (D) of the rotor shaft (16) and in which the stator (12) is received or can be inserted by way of the stator support (29) and the rotor (13) is received or can be inserted by way of the rotor shaft (16), and
- a connection adapter (30) in which the phase connection wires (26) are radially oriented and are received in a connection grid which is adapted to the connection points (27) of the printed circuit board (21),
- wherein the connection adapter (30) has an annular portion (44, 55, 63, 64) which engages partially or completely around the stator support (29).

2. Drive apparatus (1) according to Claim 1, **characterized**
- **in that** the connection adapter (30) has a number, in particular a number corresponding to the number of phase connection wires (26), of hole- or slot-like wire openings (35), and/or
- **in that** the connection adapter (30) has a number, in particular a number corresponding to the number of phase connection wires (26), of wire openings (35) which are arranged in a connection grid which is tangentially oriented and radially spaced-apart from the stator support (29), and/or
- **in that** the connection adapter (30) has a number, in particular a number corresponding to the number of phase connection wires (26), of slot-like wire openings (35), which are arranged along an arc of a circle with a centre point angle (α) of between 100° and 180°, preferably with a centre point angle (α) of (130 ± 15)°, in particular as or in the form of axial grooves, or recesses (61), in particular as or in the form of radial grooves.

3. Drive apparatus (1) according to Claim 1 or 2, **characterized**
**in that** the connection adapter (30) has at least one joining element (31, 53) which corresponds to a joining opening in the gear mechanism housing (2), preferably in the region of a transition between the electronics compartment (23) and the housing shaft (25).

4. Drive apparatus (1) according to any of Claims 1 to 3,
**characterized**
- **in that** the connection adapter (30) has a number of, preferably two, axially oriented, in particular pin-like or dowel-like, joining elements (53), or
- **in that** the connection adapter (30) has an, in particular pin-like or dowel-like, preferably radially orientated, joining element (31) which is integrally formed via at least one predetermined breaking point (33), wherein a joining connection becomes or is established by pressing the joining element (31) on the adapter into the joining opening in the housing.

5. Drive apparatus (1) according to any of Claims 1 to 4,
**characterized**
- **in that** the connection adapter (30) has radially oriented caulking studs (34) for fixing the printed circuit board (21), and/or
- **in that** at least one caulking stud (34') for fixing the printed circuit board (21) is provided in the electronics compartment (23) of the gear mechanism housing (2).

6. Drive apparatus (1) according to any of Claims 1 to 5,
**characterized by**
at least one, in particular half-shell-shaped, slot cell insulation (45) which is associated with the stator (12), is provided as a coil or winding former for the stator winding (14), which is formed in particular from individual, double or multiple coils, and has a collar-like cap portion (46) which engages around the stator support (29).

7. Drive apparatus (1) according to Claim 6,
**characterized**
**in that** the annular portion (44, 55) of the connection adapter (30) partially or completely engages around the sleeve-like cap portion (46) of the slot cell insulation (45).

8. Drive apparatus (1) according to Claim 7, **characterized**
- **in that** the closed annular portion (44) of the connection adapter (30) has a joining contour (49) which corresponds to a joining groove (50) of the cap portion (46) of the slot cell insulation (45) so as to establish a positive-locking connection, or
- **in that** the partially closed annular portion (44) of the connection adapter (30) has arc-shaped latching arms (55) with latching elements (56) at the end, the latching elements latching on corresponding latching contours (57) on the cap portion (46) of the slot cell insulation (45) in the assembled state.

9. Drive apparatus (1) according to Claim 2, **characterized**
- **in that** the connection adapter, as a clamping ring (30), has a radial annular portion (63) with a ring opening (65) for the stator support (29) and with the recesses (61) for the phase connection wires (26) and has an axial annular portion (64) integrally formed on the radial annular portion (63), in particular directed towards the stator (12), and/or
- **in that** the clamping ring, as the connection adapter (30), has two half-rings (30a, 30b) which can be or are joined to each other.

10. Drive apparatus (1) according to any of Claims 1 to 9,
**characterized**
**in that** six phase connection wires (26) or three phase connection pairs are provided.

11. Drive apparatus (1) according to any of Claims 1 to 10 for use in a window regulator, in particular in a cable window regulator.

## Revendications

1. Dispositif d'entraînement (1), en particulier d'un mécanisme d'entraînement de réglage à moteur électrique d'un véhicule automobile, comportant
- un moteur électrique sans balai (4) qui comporte un rotor (13) auquel est accouplé un arbre de rotor (16) et un stator (12) qui comprend un support de stator (29) en forme de douille ou de forme cylindrique creuse et un corps de base de stator monté sur le support de stator (29), lequel comporte un enroulement (14) de champ tournant ou de stator comprenant un certain nombre de fils de connexion de phase (26),
- un carter de transmission (2) comportant un compartiment électronique (23) dans lequel peut être insérée ou reçue une carte de circuits imprimés (21), avec des emplacements de connexion (27) pour les fils de connexion de phase (26) et avec un puits de carter (25) coaxial à l'axe de rotation (D) de l'arbre de rotor (16), dans lequel le stator (12) doté du support de stator (29) et le rotor (13) doté de l'arbre de rotor (16) sont reçus ou peuvent être introduits, et
- un adaptateur de connexion (30), dans lequel les fils de connexion de phase (26) sont orientés radialement et reçus dans une grille de connexion adaptée aux points de connexion (27) de la carte de circuits imprimés (21),
- l'adaptateur de connexion (30) présentant une partie annulaire (44, 55, 63, 64) entourant partiellement ou complètement le support de stator (29).

2. Dispositif d'entraînement (1) selon la revendication 1,
**caractérisé**
- **en ce que** l'adaptateur de connexion (30) présente un nombre d'ouvertures pour fils (35) en forme de trous ou de fentes, lequel nombre correspond en particulier au nombre de fils de connexion de phase (26), et/ou
- **en ce que** l'adaptateur de connexion (30) présente un nombre d'ouvertures pour fils (35), lequel nombre correspond en particulier au nombre de fils de connexion de phase (26), disposées dans une grille de connexion orientée tangentiellement et espacée radialement du support de stator (29), et/ou
- **en ce que** l'adaptateur de connexion (30) présente un nombre d'ouvertures pour fils (35) en forme de fentes, en particulier sous la forme de rainures axiales, ou d'évidements (61), en particulier sous forme de rainures radiales, disposés le long d'un arc de cercle présentant un angle au centre (α) compris entre 100° et 180°, présentant de préférence un angle au centre (α) de (130 ± 15) °, lequel nombre correspond en particulier au nombre de fils de connexion de phase (26).

3. Dispositif d'entraînement (1) selon la revendication 1 ou 2,
**caractérisé**
**en ce que** l'adaptateur de connexion (30) présente au moins un élément d'assemblage (31, 53) qui correspond à une ouverture d'assemblage dans le carter de transmission (2), de préférence dans la zone d'une transition entre le compartiment électronique (23) et le puits de carter (25) .

4. Dispositif d'entraînement (1) selon l'une des revendications 1 à 3,
**caractérisé**
- **en ce que** l'adaptateur de connexion (30) présente plusieurs éléments d'assemblage (53), de préférence deux, qui sont orientés axialement, en particulier en forme de tourillons ou de chevilles, ou
- **en ce que** l'adaptateur de connexion (30) présente un élément d'assemblage (31) formé par l'intermédiaire d'au moins une zone de rupture (33), en particulier en forme de tourillon ou de cheville, de préférence orienté radialement, une liaison par assemblage étant ou ayant été établie par insertion par pression de l'élément d'assemblage (31) côté adaptateur, dans l'ouverture d'assemblage côté carter.

5. Dispositif d'entraînement (1) selon l'une des revendications 1 à 4,
**caractérisé**
- **en ce que** l'adaptateur de connexion (30) présente des tétons de matage (34) orientés radialement pour la fixation de la carte de circuits imprimés (21), et/ou
- **en ce qu'**au moins un téton de matage (34') est prévu dans le compartiment électronique (23) du carter de transmission (2) pour la fixation de la carte de circuits imprimés (21).

6. Dispositif d'entraînement (1) selon l'une des revendications 1 à 5,
**caractérisé par**
au moins une isolation de boîte à encoches (45) associée au stator (12), en particulier en forme de demi-coque, prévue comme corps de bobine ou d'enroulement pour l'enroulement de stator (14), en particulier formé de bobines individuelles, doubles ou multiples, et comportant une partie capuchon (46) de type manchon entourant le support de stator (29).

7. Dispositif d'entraînement (1) selon la revendication 6,
**caractérisé**
**en ce que** la partie annulaire (44, 55) de l'adaptateur de connexion (30) entoure partiellement ou complètement la partie capuchon (46) de type de manchon de l'isolation de boîte à encoches (45).

8. Dispositif d'entraînement (1) selon la revendication 7,
**caractérisé**
- **en ce que** la partie annulaire (44) fermée de l'adaptateur de connexion (30) présente un contour d'assemblage (49) qui correspond par complémentarité de forme à une rainure d'assemblage (50) de la partie capuchon (46) de l'isolation de boîte à encoches (45), ou
- **en ce que** la partie annulaire (44) partiellement fermée de l'adaptateur de connexion (30) présente des bras d'encliquetage (55) incurvés dotés d'éléments d'encliquetage (56) situés du côté de l'extrémité qui, à l'état monté, s'encliquettent sur des contours d'encliquetage (57) correspondants sur la partie capuchon (46) de l'isolation de boîte à encoches (45).

9. Dispositif d'entraînement (1) selon la revendication 2,
**caractérisé**
- **en ce que** l'adaptateur de connexion présente, en tant que bague de serrage (30), une partie annulaire radiale (63) dotée d'une ouverture annulaire (65) pour le support de stator (29) et des évidements (61) pour les fils de connexion de phase (26), et une partie annulaire axiale (64) formée sur la partie annulaire radiale (63), en particulier dirigée vers le stator (12), et/ou
- **en ce que** la bague de serrage présente, en tant qu'adaptateur de connexion (30), deux demi-bagues (30a, 30b) pouvant être assemblées ou étant assemblées l'une à l'autre.

10. Dispositif d'entraînement (1) selon l'une des revendications 1 à 9,
**caractérisé**
**en ce qu'**il est prévu six fils de connexion de phase (26) ou trois paires de connexion de phase.

11. Dispositif d'entraînement (1) selon l'une des revendications 1 à 10, destiné à être utilisé dans un lève-vitre, en particulier dans un lève-vitre à câble.
